(19) **Europäisches Patentamt**
**European Patent Office**
**Office européen des brevets**

(11) **EP 4 517 374 A1**

(12) **EUROPEAN PATENT APPLICATION**
published in accordance with Art. 153(4) EPC

(43) Date of publication:
**05.03.2025 Bulletin 2025/10**

(21) Application number: **22939769.0**

(22) Date of filing: **23.09.2022**

(51) International Patent Classification (IPC):
***G01S 7/497*** (2006.01)

(52) Cooperative Patent Classification (CPC):
**G01N 21/47; G01N 21/55; G01S 7/497; G01S 17/08**

(86) International application number:
**PCT/CN2022/120779**

(87) International publication number:
**WO 2023/206946 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.04.2022 CN 202210467154**

(71) Applicant: **Hesai Technology Co., Ltd.**
**Shanghai 201821 (CN)**

(72) Inventors:
• **CHEN, Jinsong**
 **Shanghai 201821 (CN)**
• **WANG, Haibo**
 **Shanghai 201821 (CN)**
• **KUANG, Songyang**
 **Shanghai 201821 (CN)**
• **WANG, Weisong**
 **Shanghai 201821 (CN)**
• **XIANG, Shaoqing**
 **Shanghai 201821 (CN)**

(74) Representative: **Alatis**
**3, rue Paul Escudier**
**75009 Paris (FR)**

(54) **DETECTION METHOD FOR LASER RADAR, DETECTION SYSTEM OF LASER RADAR, AND LASER RADAR**

(57) A detection method for a LiDAR and a detection system thereof, and a LiDAR are provided. The detection method includes: performing a reflection receiving operation to enable a detector of a channel to be detected to receive multiple echo signals reflected by a target plate, to receive multiple reflectivity measurement values of the channel to be detected for the target plate determined by the LiDAR, where the channel to be detected is a detection channel of the LiDAR; and determining a reflectivity parameter of the channel to be detected based on a result of the reflection receiving operation, where the reflectivity parameter of the channel to be detected includes: at least one of reflectivity accuracy of the channel to be detected or reflectivity precision of the channel to be detected. The detection method can determine consistency of reflectivity measurement of respective channels of the LiDAR and reflectivity measurement accuracy of an entire LiDAR system. The detection method is applicable to any type of LiDAR, to improve accuracy of evaluating reflectivity performance of the LiDAR.

FIG. 1

# Description

This application claims priority to Chinese Patent Application No. 202210467154.6, filed on April 29, 2022 and entitled "DETECTION METHOD FOR LIDAR AND DETECTION SYSTEM THEREOF, AND LIDAR" to the China National Intellectual Property Administration, the disclosure of which is herein incorporated by reference in its entirety.

## TECHNICAL FIELD

This disclosure relates to the field of laser detection technologies and, in particular, to a detection method for a LiDAR ("Light Detection And Ranging") and a detection system thereof, and a LiDAR.

## BACKGROUND

A LiDAR is a typically used ranging sensor, which has characteristics of long detection distance, high resolution, and high resistance to environmental interference, or the like, and is widely used in intelligent robots, unmanned aerial vehicles, unmanned driving, or other fields. In recent years, an autonomous driving technology has developed rapidly, and the LiDAR, as a core sensor of its distance perception, is indispensable.

The LiDAR emits an optical signal by a laser, receives an echo signal reflected by a target object by a detector and converts the echo signal into an electrical signal, calculates time of flight ("ToF") of a signal based on transmitting time of the optical signal and receiving time of the echo signal, and determines distance of the target object combined with speed of light.

Any object in nature can absorb and reflect incident light after being irradiated by light. Under the same incident light, intensity of reflected light formed on surfaces of different objects is different. The intensity of the reflected light is related to reflectivity of a surface of an object, the reflectivity means a ratio of radiant energy of the reflected light formed on the surface of the object to total radiant energy incident to the surface of the object. If energy incident to the surface of the object is completely absorbed without any return, the reflectivity of the surface of the object is 0%. If the energy incident to the surface of the object is completely reflected without any absorption, the reflectivity of the surface of the object is 100%. The greater the reflectivity, the stronger a reflection capability of the surface of the object.

The LiDAR can not only measure the distance, but also determine the reflectivity of a surface of the target object. The LiDAR can characterize strength of the echo signal based on signal characteristics of the electric signal determined from the echo signal, and determine the reflectivity based on the strength of the echo signal and equivalent emitted light intensity attenuated by the distance.

Largest distance that the LiDAR can detect is influenced by the reflectivity of the surface of the target object. LiDAR products from different manufacturers are usually marked with a ranging capability under certain reflectivity, such as 200 m @ 10%. This parameter means that energy reflected by an object with the reflectivity greater than 10% within 0 to 200 m is enough to generate an echo. For the object with the reflectivity less than or equal to 10%, when the distance is greater than 200 m, echo energy is low due to attenuation of reflected energy in atmospheric transmission or other reasons, and probability of detecting the echo by the LiDAR is very small, and thus largest detection distance corresponding to the LiDAR is 200 m.

To ensure safety of the LiDAR applications in fields such as unmanned driving, or the like, it is beneficial to evaluate a detection capability of the LiDAR to determine whether the LiDAR can effectively function. A reflectivity performance parameter is an important index to reflect the detection capability of the LiDAR, but there is no unified method for measuring the reflectivity performance parameter currently to evaluate the detection capability of the LiDAR.

## SUMMARY

In view of this, this disclosure provides a detection method for a LiDAR and a detection system thereof, and a LiDAR to improve accuracy of evaluating a reflectivity performance parameter of the LiDAR.

This disclosure provides a detection method for a LiDAR, including:
performing a reflection receiving operation to enable a detector of a channel to be detected to receive multiple echo signals reflected by a target plate, to receive multiple reflectivity measurement values of the channel to be detected for the target plate determined by the LiDAR, where the channel to be detected is a detection channel of the LiDAR; and determining a reflectivity parameter of the channel to be detected based on a result of the reflection receiving operation, where the reflectivity parameter of the channel to be detected includes: at least one of reflectivity accuracy of the channel to be detected or reflectivity precision of the channel to be detected.

Optionally, the reflection receiving operation includes: enabling the channel to be detected to scan across the target plate for at least once; and determining a reflectivity measurement value of at least one reflection point each time the channel to be detected scans across the target plate.

Optionally, the target plate has a predetermined reflectivity standard value; and the step of determining the reflectivity parameter of the channel to be detected include: determining the reflectivity accuracy of the channel to be detected based on the reflectivity standard value and the multiple reflectivity measurement values; and determining the reflectivity precision of the channel to be detected based on the multiple reflectivity measurement values.

Optionally, the reflection receiving operation further includes: determining the channel to be detected.

Optionally, in the step of performing the reflection receiving operation, the reflection receiving operation is performed on one channel to be detected each time.

Optionally, the step of determining the channel to be detected includes: changing a position and orientation of the LiDAR relative to the target plate, to cause a laser beam emitted by the channel to be detected to be incident on the target plate at a predetermined angle.

Optionally, the reflection receiving operation further includes: changing measurement distance between the target plate and the LiDAR; performing the reflection receiving operation at the measurement distance to determine the multiple reflectivity measurement values at the measurement distance, in the step of performing the reflection receiving operation; and determining the reflectivity parameter of the channel to be detected at the measurement distance, in the step of determining the reflectivity parameter of the channel to be detected.

Optionally, before determining the channel to be detected, the measurement distance between the target plate and the LiDAR is changed.

Optionally, the reflection receiving operation further includes: changing the reflectivity standard value of the target plate; determining the multiple reflectivity measurement values for the target plate of the reflectivity standard value at the measurement distance, in the step of performing the reflection receiving operation; and determining the reflectivity parameter of the channel to be detected for the target plate of the reflectivity standard value at the measurement distance, in the step of determining the reflectivity parameter of the channel to be detected.

Optionally, before determining the measurement distance between the target plate and the LiDAR, the reflectivity standard value of the target plate is changed.

Optionally, the step of changing the reflectivity standard value of the target plate includes: replacing the target plate, where different target plates have different reflectivity standard values.

Optionally, the detection method further includes: determining the reflectivity parameter of the LiDAR after the step of determining the reflectivity parameter of the channel to be detected, where the reflectivity parameter of the LiDAR includes: the reflectivity parameter of each detection channel of the LiDAR for the target plate of at least one reflectivity standard value at least one measurement distance.

Correspondingly, this disclosure further discloses a detection system for a LiDAR, including: a detector apparatus configured to implement the detection method of this disclosure to determine a reflectivity parameter of a channel to be detected in the LiDAR.

In addition, this disclosure further discloses a detection system for a LiDAR, including:
a reflection receiving operator module configured to perform a reflection receiving operation to enable a detector of a channel to be detected to receive multiple echo signals reflected by a target plate, to receive multiple reflectivity measurement values of the channel to be detected for the target plate, where the channel to be detected is a detection channel of the LiDAR; and an evaluator module configured to determine a reflectivity parameter of the channel to be detected based on a result of the reflection receiving operation, where the reflectivity parameter of the channel to be detected includes: at least one of reflectivity accuracy of the channel to be detected or reflectivity precision of the channel to be detected.

Optionally, the reflection receiving operator module includes: a mechanical unit configured to fix and change the LiDAR and the target plate, a controller unit configured to control the LiDAR to perform the reflection receiving operation, and a reader unit configured to read point cloud data, where the controller unit enables the channel to be detected to scan across the target plate for at least once, and the reader unit determines a reflectivity measurement value of at least one reflection point each time the channel to be detected scans across the target plate.

Optionally, the controller unit is further configured to determine the channel to be detected.

Optionally, the controller unit determines one channel to be detected each time the reflection receiving operation is performed.

Optionally, before the reflection receiving operation is performed, the controller unit changes a position and orientation of the LiDAR relative to the target plate by the mechanical unit, to cause a laser beam emitted by the channel to be detected to be incident on the target plate at a predetermined angle.

Optionally, at least one of the LiDAR or the target plate is movably fixed to the mechanical unit, where the mechanical unit further includes: a measurer component configured to determine measurement distance between the target plate and the LiDAR.

Optionally, the number of the target plates is multiple, and different target plates have different reflectivity standard values.

Optionally, the evaluator module includes: an integrator unit configured to determine the reflectivity parameter of the LiDAR, where the reflectivity parameter of the LiDAR includes: the reflectivity parameter of at least one detection channel of the LiDAR for the target plate of at least one reflectivity standard value at at least one measurement distance.

In addition, this disclosure further discloses a LiDAR, where reflectivity accuracy of the LiDAR ranges from -40% to 40%, and where the reflectivity accuracy of the LiDAR is determined by the detection method of this disclosure.

This disclosure further discloses a LiDAR, where reflectivity precision of the LiDAR ranges from 0 to 40%, and where the reflectivity precision of the LiDAR is determined by the detection method of this disclosure.

Compared with the existing technologies, technical solutions of this disclosure have the following advantages.

In the technical solutions of this disclosure, the target plate with the predetermined reflectivity is used under a predetermined environmental condition, and the multiple reflectivity measurement values can be determined using the LiDAR under a condition that the LiDAR is at predetermined distance from the target plate. On this basis, the reflectivity accuracy and precision of the LiDAR for detection of an object within its field of view are counted to determine consistency of reflectivity measurement of respective channels of the LiDAR and reflectivity measurement accuracy of an entire LiDAR system, which is applicable to any type of LiDAR, such as a mechanical LiDAR and a solid-state LiDAR, or the like, to improve accuracy of evaluating reflectivity performance of the LiDAR.

## BRIEF DESCRIPTION OF THE DRAWINGS

To explain embodiments of this disclosure or technical solutions in the existing technologies more clearly, drawings required in the description of the embodiments or the existing technologies can be briefly introduced below, and it is clear that the drawings described below are merely some embodiments of this disclosure, and that other drawings can also be determined based on these drawings for those ordinary skilled in the art without creative labor.

Fig. 1 shows a flow diagram of a detection method for a LiDAR, provided in an embodiment of this disclosure.
Fig. 2 shows a schematic structural diagram of a detection system used in a reflection receiving operation step in an embodiment of a detection method for a LiDAR shown in Fig. 1.
Fig. 3 shows a schematic diagram of a reflection principle for Lambertian.
Fig. 4 shows a schematic diagram of an optical path during a reflection receiving operation step in an embodiment of a detection method for a LiDAR shown in Fig. 1.
Fig. 5 shows a schematic diagram of local distribution of laser beams emitted by a detection channel of a LiDAR in a vertical field of view, provided in an embodiment of this disclosure.
Fig. 6 is a schematic diagram of distribution of reflection points formed on a target plate by laser beams emitted by a channel to be detected of a LiDAR, provided in an embodiment of this disclosure.

## DETAILED DESCRIPTION

It can be seen from background that there is no unified method for measuring a reflectivity performance parameter currently to evaluate a detection capability of a LiDAR.

To solve the technical problem, this disclosure provides a detection method for a LiDAR, including: performing a reflection receiving operation to enable a detector of a channel to be detected to receive multiple echo signals reflected by a target plate, to receive multiple reflectivity measurement values of the channel to be detected for the target plate determined by the LiDAR, the channel to be detected is a detection channel of the LiDAR; and determining a reflectivity parameter of the channel to be detected based on a result of the reflection receiving operation, the reflectivity parameter of the channel to be detected includes: at least one of reflectivity accuracy of the channel to be detected or reflectivity precision of the channel to be detected.

In technical solutions of this disclosure, the detection method can determine consistency of reflectivity measurement of respective channels of the LiDAR and reflectivity measurement accuracy of an entire LiDAR system. The detection method has a wide application range, which is applicable to any type of LiDAR, such as a mechanical LiDAR and a solid-state LiDAR, or the like, to cause reflectivity performance of commercially available LiDARs to be intuitively compared and effectively evaluated, to improve accuracy of evaluating the reflectivity performance of the LiDAR.

To make the above objectives, features, and advantages of this disclosure more obvious and easier to understood, specific embodiments of this disclosure are described below in detail with reference to the drawings.

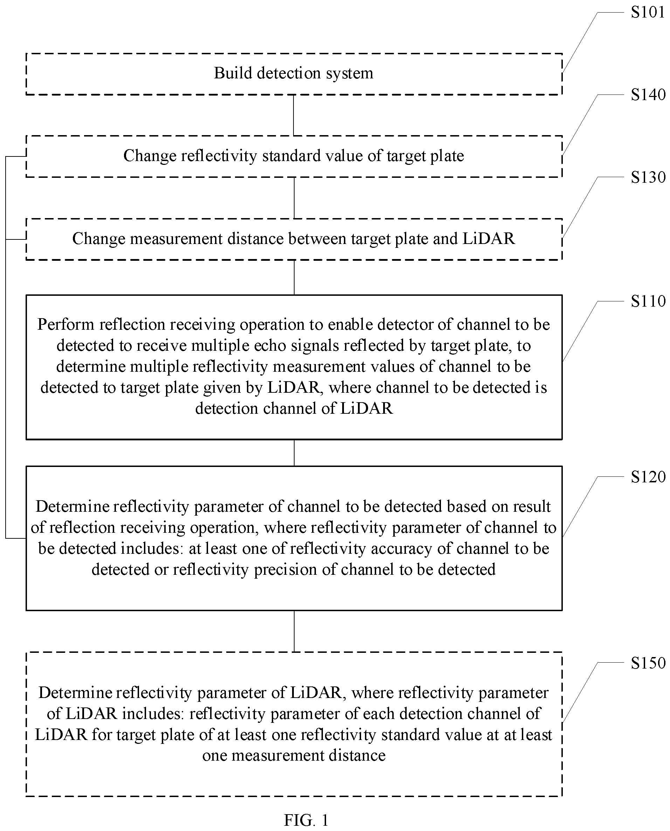

With reference to Fig. 1, a flow diagram of a detection method for a LiDAR, provided in an embodiment of this disclosure, is shown.

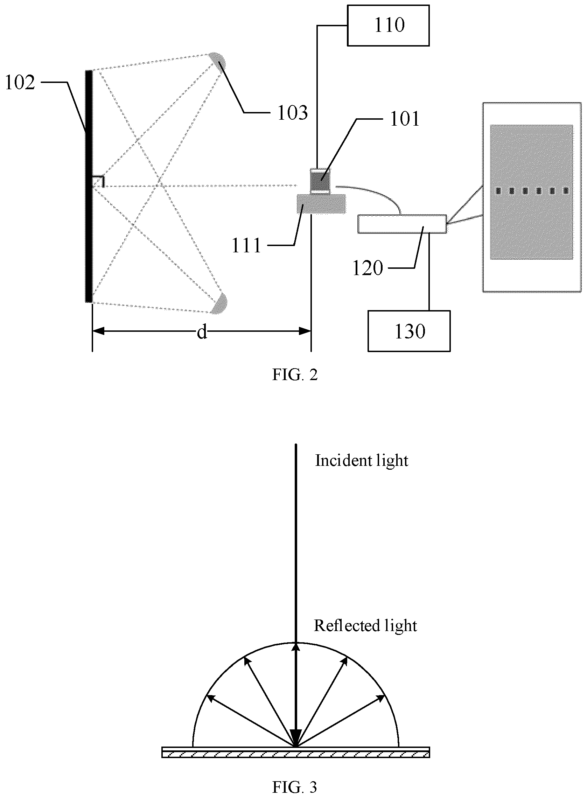

The detection method includes: performing a step S110 to perform a reflection receiving operation to enable a detector of a channel to be detected to receive multiple echo signals reflected by a target plate 102 (as shown in Fig. 2), to receive multiple reflectivity measurement values of the channel to be detected for the target plate 102 determined by the LiDAR, the channel to be detected is a detection channel of the LiDAR 101 (as shown in Fig. 2); and performing a step S120 to determine a reflectivity parameter of the channel to be detected based on a result of the reflection receiving operation, the reflectivity parameter of the channel to be detected includes: at least one of reflectivity accuracy of the channel to be detected or reflectivity precision of the channel to be detected.

It should be noted that before performing the step S110 to perform the reflection receiving operation, the detection method further includes: performing a step S101 to build a detection system. The detection system is configured to perform the reflection receiving operation.

With reference to Fig. 2, a schematic structural diagram of a detection system used in a reflection receiving operation step in an embodiment of a detection method for a LiDAR 101 shown in Fig. 1 is shown.

In some embodiments of this disclosure, the detection system includes: a mechanical unit (not shown in the figure) configured to fix and change the LiDAR 101 and the target plate 102, at least one of the LiDAR 101 or the target plate 102 is movably fixed to the mechanical unit.

As shown in Fig. 2, the mechanical unit includes a rotary table 111, and the LiDAR 101 is fixed to a tabletop of the rotary table 111. The rotary table 111 is a two-dimensional rotary table, that is, the rotary table 111 has two rotating shafts, one of which is perpendicular to the tabletop of the rotary table 111 and the other of which is parallel to the tabletop of the rotary table 111. For a mechanical rotary LiDAR and a rotating-mirror LiDAR, the rotary table 111 is configured to carry the LiDAR and change an attitude of the LiDAR. For the solid-state LiDAR, the rotary table 111 can also drive the LiDAR to rotate.

In some embodiments of this disclosure, the height of the rotary table 111 can be changed based on a size of the target plate 102, to cause a ranging center of the LiDAR 101 and a center of the target plate 102 to be at the same height.

In some embodiments of this disclosure, the LiDAR 101 has a vertical field of view ("vertical FOV") and a horizontal field of view ("horizontal FOV"). The LiDAR 101 is fixed to the tabletop of the rotary table 111. The height of the rotary table, the size of the target plate, and distance between the LiDAR and the target plate are changed based on the vertical field of view and the horizontal field of view of the LiDAR, to cause that reflectivity of the LiDAR 101 at each azimuth angle can be detected.

Among them, the target plate 102 is Lambertian. As shown in Fig. 3, when incident energy is uniformly reflected in all directions, that is, the incident energy is centered at an incident point, phenomenon of isotropically reflecting energy around in a whole hemispherical space is called diffuse reflection, also called isotropic reflection. A complete diffuser is called Lambertian. An ideal diffusion surface should follow a Lambert's law, that is, no matter where incident light comes from, luminous intensity of diffused light in all directions is proportional to $\cos\theta$ ($\theta$ is an angle between a reflection direction of the diffused light and a normal of a reflection surface).

Specifically, in the embodiment shown in Fig. 2, the height of the target plate 102 is 0.5 m to 3 m, the width of the target plate is 0.5 m to 3 m, and the target plate 102 is Lambertian with a calibrated reflectivity standard value.

Specifically, the target plate 102 has a predetermined reflectivity standard value, such as 10%, 50%, and 90%. In some embodiments of this disclosure, the size of the target plate 102 enables the target plate 102 to cover a field of view of the LiDAR 101 at predetermined distance, and the predetermined distance can be determined to be very small, such as 0.3 m, 0.5 m, and 1 m.

As shown in Fig. 2, the target plate 102 is fixed within the field of view of the LiDAR 101, the target plate 102 is vertically placed, and a connecting line between the ranging center of the LiDAR and a geometric center of the target plate is perpendicular to a surface of the target plate.

It should be noted that in some embodiments of this disclosure, the number of the target plates 102 is multiple, and different target plates 102 have different reflectivity standard values. By replacing the target plate 102, reflectivity performance parameters of the LiDAR for targets with different reflectivity can be detected.

In addition, in some embodiments of this disclosure, the mechanical unit further includes: a measurer component (not shown in the figure) configured to determine measurement distance d between the target plate 102 and the LiDAR 101. By determining the measurement distance d, the reflectivity performance parameters of the LiDAR at different measurement distance d are determined. In some embodiments, the measurement distance d between the LiDAR 101 and the target plate 102 can be 0.5 m, 1 m, 3 m, and 5 m.

In addition, in some embodiments of this disclosure, the detection system further includes: an external light source 103. The external light source 103 conforms to CIE standards, and two external light sources can be used, the two external light sources are symmetrically arranged at the top and bottom of the target plate 102. The external light source 103 is configured to illuminate the target plate 102, to determine luminous flux received by the target plate 102 per unit area, control illuminance of the target plate 102, and simulate ambient light of the LiDAR 101 during use. With provision of the external light source 103, simulation of an environment with predetermined illuminance (e.g., the illuminance can be 10 to 150 lux) can be realized.

As shown in Fig. 2, in some embodiments of this disclosure, the detection system further includes: a reader unit 120. The reader unit 120 is configured to read and display point cloud data determined by the LiDAR 101, and is connected in communication with the LiDAR. The reader unit includes a storage medium and a processor, the storage medium stores at least one instruction set for reading the point cloud data of the LiDAR when the LiDAR works, and the processor is connected in communication with the reader unit for determining and displaying the point cloud data of the LiDAR 101. Based on actually detected point cloud data, reflectivity measurement values of respective effective reflection points can be selected and recorded. Specifically, the reader unit 120 can be a point cloud visualization device.

It should be noted that the point cloud data of the LiDAR includes: position coordinates of each reflection point and a reflectivity measurement value of each reflection point. Reflectivity measurement values of all reflection points in the point cloud data can be extracted by the reader unit 120, to determine the reflectivity measurement values of the respective effective reflection points.

Continuously with reference to Fig. 1, after the step S101 is performed to build the detection system, the step S110 is performed to perform the reflection receiving operation, and the reflection receiving operation is configured to receive the reflectivity measurement value of the channel to be detected, which is determined by the LiDAR.

In some embodiments of this disclosure, the reflection receiving operation includes: enabling the channel to be detected to scan across the target plate 102 for at least once, and determining the reflectivity measurement value of at least one reflection point each time the channel to be detected scans across the target plate 102.

It should be noted that the LiDAR 101 includes multiple lasers and multiple detectors, at least one laser and at least one detector form a detection channel, and multiple lasers and multiple detectors form multiple detection channels.

It should be noted that in some embodiments of this disclosure, in the step of performing the reflection receiving operation, the reflection receiving operation is performed on one channel to be detected each time. In some embodiments of this disclosure, the LiDAR 101 is a multi-line LiDAR 101, that is, the LiDAR 101 has multiple detection channels, and thus the reflection receiving operation further includes: determining the channel to be detected, that is, selecting at least one channel from the multiple detection channels as the channel to be detected.

It should be noted that in some embodiments of this disclosure, the number of the channel to be detected during each reflection receiving operation can be one. In other embodiments of this disclosure, the number of the channels to be detected during each the reflection receiving operation can be multiple.

Specifically, in some embodiments, the step of determining the channel to be detected includes: changing a position and orientation of the LiDAR 101 relative to the target plate 102, to cause a laser beam emitted by the channel to be detected to be incident on the target plate 102 vertically placed in a horizontal direction.

Specifically, in some embodiments of this disclosure, a pitch angle of the LiDAR 101 can be changed based on an internal parameter of the LiDAR 101, to cause the laser beam emitted by the channel to be detected to be incident to the target plate 102 at a predetermined angle. The internal parameter of the LiDAR 101 includes: vertical angles of respective lasers in the LiDAR 101.

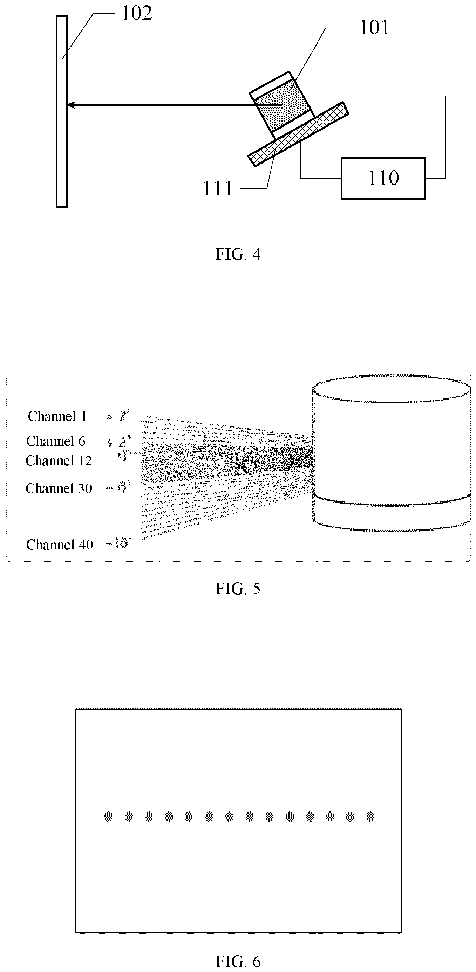

As shown in Fig. 4, the position and orientation of the LiDAR 101 relative to the target plate 102 can be changed by the rotary table 111, to cause the laser beam emitted by the channel to be detected to be incident on the target plate 102 vertically placed in the horizontal direction.

It should be noted that in some embodiments, one laser and one detector form a detection channel, each detection channel performs detection in a direction at one vertical angle. With reference to Fig. 5, 40 channels/lines are shown with a vertical field of view ("FOV") of -16° to 7°, the vertical field of view is formed of vertical detection angles of all lasers. Among them, a vertical angle of a uppermost laser is 7°, and a detection channel including the uppermost laser performs distance detection in 7° vertical direction, and a vertical angle of a lowermost laser is -16° and a detection channel including the lowermost laser performs distance detection in -16° vertical direction. That is to say, optical signals emitted by transmitter units in a same detection channel can be reflected by obstacles and returned to the LiDAR, and can be received by detector units of the same detection channel as the transmitter units. Sub-fields of view of all detection channels together form a scanning interval of the vertical field of view of the whole LiDAR. By determining the internal parameter of the LiDAR, the vertical angles of the lasers can be determined. When it is determined that the channel to be detected is a detection channel corresponding to the uppermost laser, the LiDAR can be changed by 7° in a vertical direction, to cause a beam from the uppermost laser of the LiDAR to be incident on the target plate in the horizontal direction. For the multi-line LiDAR, laser beams emitted by respective detection channels of the LiDAR are sequentially incident on the target plate at a predetermined angle in turn by constantly changing the position and orientation of the LiDAR relative to the target plate.

Specifically, the pitch angle of the LiDAR 101 and the direction of the LiDAR 101 are changed by the rotary table 111, to cause the laser beam emitted by the channel to be detected to be incident on the target plate 102 vertically placed in the horizontal direction. After the channel to be detected is determined and a relative position and orientation of the LiDAR 101 is changed, the LiDAR 101 is started to scan.

With reference to Fig. 6, a schematic diagram of distribution of reflection points formed on a target plate by laser beams emitted by a channel to be detected after a LiDAR is started to scan, provided in an embodiment of this disclosure, is shown.

In some embodiments of this disclosure, the reflection receiving operation includes: enabling the channel to be detected to scan across the target plate 102 for at least once, and determining the reflectivity measurement value of at least one reflection point each time the channel to be detected scans across the target plate 102.

In some embodiments of this disclosure, in the reflection receiving operation, the number of effective reflection points is greater than or equal to 200. The number of the effective points in a single frame of the LiDAR 101 can be several, dozens or hundreds. Accordingly, in the reflection receiving operation, the channel to be detected can be enabled to scan across the target plate 102 for at least several times to determine reflectivity measurement values of 200 or more effective reflection points. Specifically, the reflectivity measurement values of multiple effective reflection points are read and recorded by the reader unit 120, that is, the point cloud visualization device.

After the reflection receiving operation is performed, a step S120 is performed to determine a reflectivity parameter of the channel to be detected based on a result of the reflection receiving operation.

In some embodiments of this disclosure, the target plate 102 has a predetermined reflectivity standard value, and the step of determining the reflectivity parameter of the channel to be detected include: determining the reflectivity accuracy of the channel to be detected based on the reflectivity standard value and multiple reflectivity measurement values; and determining the reflectivity precision of the channel to be detected based on the multiple reflectivity measurement values.

The reflectivity accuracy can reflect difference between the reflectivity measurement value determined by the LiDAR 101 and the reflectivity standard value. Higher reflectivity accuracy represents higher consistency between a reflectivity measurement value of the LiDAR 101 and real data.

Specifically, the step of determining the reflectivity accuracy of the channel to be detected include: determining an average measurement value based on an average value of the multiple reflectivity measurement values; and determining the reflectivity accuracy of the channel to be detected based on difference between the average measurement value and the reflectivity standard value:

$$\mu = \overline{R}_1 - R$$

among them, $\mu$ represents the reflectivity accuracy of the LiDAR 101; $\overline{R}_1$ represents the average measurement value; and R represents the reflectivity standard value of the target plate 102.

Specifically, the step of determining the reflectivity accuracy of the channel to be detected can further include: determining an average measurement value based on the average value of the multiple reflectivity measurement values; and determining the reflectivity accuracy of the channel to be detected based on a ratio of the average measurement value to the reflectivity standard value.

The reflectivity precision can reflect a degree of the consistency between the multiple reflectivity measurement values determined by performing the reflection receiving operation on the target plate 102 at the same distance. Higher reflectivity precision represents smaller random error of reflectivity measurement value of the LiDAR 101.

Specifically, the step of determining the reflectivity precision of the channel to be detected includes: determining the reflectivity precision of the channel to be detected based on a standard deviation of the multiple reflectivity measurement values:

$$\sigma = \sqrt{\frac{\sum(R_i - \overline{R}_1)^2}{N}}$$

among them, $\overline{R}_1$ represents the average measurement value; Ri represents an i-th reflectivity measurement value; and N represents the number of the reflectivity measurement values.

It should be noted that in some embodiments of this disclosure, the LiDAR 101 is the multi-line LiDAR, that is, the LiDAR 101 includes: multiple detection channels. Accordingly, after the reflectivity parameter of one channel to be detected is determined, it is beneficial to determine a channel to be detected again, another channel is selected from the multiple detection channels as the channel to be detected, and the step S110 is repeated to perform the reflection receiving operation and the step S120 is performed to determine the reflectivity parameter of the channel to be detected determined again until respective reflectivity parameters of all detection channels are determined.

Specifically, the relative position and orientation of the LiDAR 101 is changed, and determined channels to be detected are enabled to be incident in the horizontal direction on the target plate 102 in turn, and the reflectivity measurement values of the multiple effective reflection points are determined for each time, to calculate the reflectivity parameter of each detection channel. Based on the reflectivity parameter of each detection channel, the standard deviation of reflectivity parameters of respective detection channels can be calculated to determine the reflectivity precision of the LiDAR to evaluate the consistency of the reflectivity measurement of the respective detection channels of the LiDAR. Based on the reflectivity accuracy of each detection channel, an average value of the reflectivity accuracy of the respective detection channels can be calculated to determine the reflectivity accuracy of the LiDAR to evaluate the reflectivity measurement accuracy of the entire LiDAR system.

Continuously with reference to Figs. 1 and 2, in some embodiments of this disclosure, the reflection receiving operation further includes: performing a step S130 to change measurement distance d between the target plate 102 and the LiDAR 101. In the step of performing the reflection receiving operation, the reflection receiving operation is performed at the measurement distance d to determine the multiple reflectivity measurement values at the measurement distance d. In the step of determining the reflectivity parameter of the channel to be detected, the reflectivity parameter of the channel to be detected is determined at the measurement distance d.

Specifically, in some embodiments of this disclosure, before the channel to be detected is determined, the measurement distance d between the target plate 102 and the LiDAR 101 is changed.

Therefore, after the reflection receiving operation is performed on all detection channels at a predetermined detection distance to determine the reflectivity parameters of all channels to be detected at the predetermined detection distance, the measurement distance d is changed using the measurer component, and the reflectivity parameter of each detection channel at the changed measurement distance d is determined again. Each time the measurement distance d is changed, the reflectivity parameter of each detection channel at the changed measurement distance d is determined.

It should be noted that selection of the effective reflection point is related to the measurement distance d. The closer the measurement distance d between the LiDAR 101 and the target plate 102 is, the greater a circumferential angle of the target plate 102 relative to the ranging center of the LiDAR 101. Reflection intensity at an edge of the target plate 102 is smaller. To ensure the consistency in detection, when detection distance between the target plate 102 and the LiDAR 101 is less than a predetermined value, the selected effective reflection point is located in a central area of the target plate 102.

Therefore, in some embodiments of this disclosure, the reflection receiving operation further includes: determining whether the target plate 102 is located in a near-field measurement range or a far-field measurement range before changing the measurement distance d between the target plate 102 and the LiDAR 101. When the target plate 102 is located in the near-field measurement range, distance between any effective reflection point and the edge of the target plate 102 is greater than 10 cm.

Specifically, in a step of determining whether the target plate 102 is located in the near-field measurement range or the far-field measurement range, it is determined whether the target plate 102 is located in the near-field measurement range or the far-field measurement range based on the measurement distance d or a central angle of the target plate 102 relative to the ranging center of the LiDAR 101.

Continuously with reference to Fig. 1, in some embodiments of this disclosure, the reflection receiving operation further includes: performing a step S140 to change a reflectivity standard value of the target plate 102. In the step of performing the reflection receiving operation, the multiple reflectivity measurement values for the target plate 102 of the reflectivity standard value is determined at the measurement distance d. In the step of determining the reflectivity parameter of the channel to be detected, the reflectivity parameter of the channel to be detected for the target plate 102 of the reflectivity standard value is determined at the measurement distance d.

Specifically, in some embodiments of this disclosure, the reflectivity standard value of the target plate 102 is changed before the measurement distance d between the target plate 102 and the LiDAR 101 is determined.

The target plate 102 has a predetermined reflectivity standard value, and thus in some embodiments of this disclosure, the step of changing the reflectivity standard value of the target plate 102 includes: replacing the target plate 102, different target plates 102 have different reflectivity standard values. Specifically, after the target plate 102 is replaced, the step S110 and the step S120 are repeatedly performed for each detection channel of the LiDAR 101 at different measurement distance d.

Continuously with reference to Fig. 2, in some embodiments of this disclosure, a step S150 is performed to determine the reflectivity parameter of the LiDAR 101 after the step of determining the reflectivity parameter of the channel to be detected. The reflectivity parameter of the LiDAR 101 includes: a reflectivity parameter of each detection channel of the LiDAR 101 for the target plate 102 of at least one reflectivity standard value at at least one measurement distance d.

Specifically, reflectivity parameters of all channels to be detected of the LiDAR 101 for target plates 102 of all reflectivity standard values at respective measurement distance d are summarized.

Specifically, for one measurement distance d and the target plate 102 of one reflectivity standard value, based on the reflectivity parameter of each detection channel, the standard deviation of the reflectivity parameters of the respective detection channels can be calculated, and the reflectivity precision of the LiDAR can be determined, to evaluate the consistency of the reflectivity measurement of the respective detection channels of the LiDAR. Based on the reflectivity accuracy of each detection channel, the average value of the reflectivity accuracy of the respective detection channels can be calculated, the reflectivity accuracy of the LiDAR can be determined, to evaluate the reflectivity measurement accuracy of the entire LiDAR system.

Correspondingly, this disclosure further discloses a detection system for a LiDAR.

The detection system includes a detector apparatus configured to implement the detection method of this disclosure to determine a reflectivity parameter of a channel to be detected in the LiDAR.

The detector apparatus implements the detection method of this disclosure, and thus specific technical solutions of the detector apparatus refer to embodiments of the detection method mentioned above, which are not repeated herein in this disclosure.

In addition, this disclosure further discloses a detection system for a LiDAR 101.

With reference to Fig. 2, a schematic structural diagram of a detection system for a LiDAR 101, provided in an embodiment of this disclosure, is shown.

The detection system for the LiDAR 101 includes: a reflection receiving operator module configured to perform a reflection receiving operation to enable a detector of a channel to be detected to receive multiple echo signals reflected by a target plate 102, to receive multiple reflectivity measurement values of the channel to be detected for the target plate 102 determined by the LiDAR, where the channel to be detected is a detection channel of the LiDAR 101; and an evaluator module 130 configured to determine a reflectivity parameter of the channel to be detected based on a result of the reflection receiving operation, where the reflectivity parameter of the channel to be detected includes: at least one of reflectivity accuracy of the channel to be detected or reflectivity precision of the channel to be detected.

The reflection receiving operator module is configured to perform the reflection receiving operation to determine the reflectivity measurement value.

As shown in Fig. 2, the reflection receiving operator module includes: a mechanical unit (not labeled in the figure) configured to fix and change the LiDAR 101 and the target plate 102; a controller unit 110 configured to control the LiDAR 101 to perform the reflection receiving operation; and a reader unit 120 configured to read point cloud data.

Among them, the mechanical unit includes the rotary table 111, and the LiDAR 101 is fixed to the tabletop of the rotary table 111. The height of the rotary table can be changed based on the size of the target plate. The rotary table 111 is the two-dimensional rotary table, that is, the rotary table 111 has two rotating shafts, one of which is perpendicular to the tabletop of the rotary table 111 and the other of which is parallel to the tabletop of the rotary table 111. For the mechanical rotary LiDAR and the rotating-mirror LiDAR, the rotary table 111 is configured to carry the LiDAR and change the attitude of the LiDAR. For the solid-state LiDAR, the rotary table 111 can also drive the LiDAR to rotate.

In some embodiments of this disclosure, the height of the rotary table 111 can be changed based on the size of the target plate 102, to cause the ranging center of the LiDAR 101 and the center of the target plate 102 to be at the same height.

In some embodiments of this disclosure, the LiDAR 101 has the vertical field of view ("vertical FOV") and the horizontal field of view ("horizontal FOV"). The LiDAR 101 is fixed to the tabletop of the rotary table 111. The height of the rotary table, the size of the target plate, and the distance between the LiDAR and the target plate are changed based on the vertical field of view and the horizontal field of view of the LiDAR, to cause that the reflectivity of the LiDAR 101 at each azimuth angle can be detected.

In an embodiment of this disclosure, the height of the target plate 102 is 0.5 m to 3 m, the width of the target plate is 0.5 m to 3 m, and the target plate 102 is the Lambertian with the calibrated reflectivity standard value.

The target plate 102 has the predetermined reflectivity standard value, such as 10%, 50%, and 90%. In some embodiments of this disclosure, the size of the target plate 102 enables the target plate to cover the field of view of the LiDAR 101 as much as possible at the predetermined distance, and the predetermined distance can be determined to be very small, such as 0.3 m, 0.5 m, and 1 m. As shown in Fig. 2, the target plate 102 is fixed within the field of view of the LiDAR 101, the target plate 102 is vertically placed, and the connecting line between the ranging center of the LiDAR and the geometric center of the target plate is perpendicular to the surface of the target plate.

It should be noted that in some embodiments of this disclosure, the number of the target plates 102 is multiple, and different target plates 102 have different reflectivity standard values. By replacing the target plate 102, the reflectivity performance parameters of the LiDAR for the targets with different reflectivity can be detected.

In addition, in some embodiments of this disclosure, at least one of the LiDAR 101 or the target plate 102 is movably fixed to the mechanical unit; and the mechanical unit further includes: a measurer component configured to determine measurement distance d between the target plate 102 and the LiDAR 101. By determining the measurement distance d, the reflectivity performance parameters of the LiDAR at different measurement distance d are determined. In some embodiments, the measurement distance d between the LiDAR 101 and the target plate 102 is 0.5 m, 1 m, 3 m, and 5 m.

In addition, in some embodiments of this disclosure, the detection system further includes: an external light source 103. The external light source 103 conforms to the CIE standards, and two external light sources can be used, the two external light sources are symmetrically arranged at the top and bottom of the target plate 102. The external light source 103 is configured to illuminate the target plate 102, to determine luminous flux received by the target plate 102 per unit area, control illuminance of the target plate 102, and simulate ambient light of the LiDAR 101 during use. With provision of the external light source 103, the simulation of the environment with the predetermined illuminance (e.g., the illuminance can be 100 lux) can be realized.

In some embodiment of this disclosure, the detection system further includes: a reader unit 120. The reader unit 120 is configured to read and display the point cloud data determined by the LiDAR 101, and is connected in communication with the LiDAR. The reader unit includes a storage medium and a processor, where the storage medium stores at least one instruction set for reading the point cloud data of the LiDAR when the LiDAR works, and the processor is connected in communication with the reader unit for determining and displaying the point cloud data of the LiDAR 101. Based on the actually detected point cloud data, the reflectivity measurement values of the respective effective reflection points can be selected and recorded. Specifically, the reader unit 120 can be the point cloud visualization device.

It should be noted that the point cloud data of the LiDAR includes: position coordinates of each reflection point and a reflectivity measurement value of each reflection point. The reader unit 120 can extract the reflectivity measurement values of all reflection points in the point cloud data, to determine the reflectivity measurement values of the respective effective reflection points.

As shown in Fig. 2, the controller unit 110 enables the channel to be detected to scan across the target plate 102 for at least once, and the reader unit 120 determines the reflectivity measurement value of at least one reflection point each time the channel to be detected scans across the target plate 102.

In some embodiments of this disclosure, the LiDAR 101 is the multi-line LiDAR 101, that is, the LiDAR 101 has multiple detection channels, and thus the controller unit 110 is also configured to determine the channel to be detected, that is, to select at least one channel from the multiple detection channels as the channel to be detected. Specifically, each time the reflection receiving operation is performed, the controller unit 110 determines one channel to be detected.

In some embodiments of this disclosure, the number of the channel to be detected during each reflection receiving operation is one. In other embodiments of this disclosure, the number of the channels to be detected during each reflection receiving operation can be multiple.

Before the reflective receiving operation is performed, the controller unit 110 changes the relative position and orientation of the LiDAR 101 by the mechanical unit based on the internal parameter of the LiDAR 101, to cause the laser beam emitted by the channel to be detected to be incident on the target plate 102 in the horizontal direction.

With reference to Fig. 4, the controller unit 110 receives the internal parameter of the LiDAR 101 from the LiDAR 101, and the internal parameter of the LiDAR 101 includes: the vertical angles of the respective lasers in the LiDAR 101. Based on the internal parameter of the LiDAR 101, the controller unit 110 changes the relative position and orientation of the LiDAR 101 by the rotary table 111, to cause the laser beam emitted by the channel to be detected to be incident on the target plate 102 in the horizontal direction.

Specifically, the controller unit 110 changes the pitch angle of the LiDAR 101 and the direction of the LiDAR 101 by the rotary table 111, to cause the channel to be detected to be incident on the target plate 102 in the horizontal direction. After the channel to be detected is determined and the relative position and orientation of the LiDAR 101 is changed, the controller unit 110 starts the LiDAR 101 to scan.

After the controller unit 110 starts the LiDAR 101, the channel to be detected scans across the target plate 102 for at least once. The reflectivity measurement value of at least one reflection point is determined each time the channel to be detected scans across the target plate 102.

In the reflection receiving operation, the number of the effective reflection points is greater than or equal to 200. The number of the effective points in the single frame of the LiDAR 101 can be several, dozens or hundreds. Accordingly, the channel to be detected scans across the target plate 102 for at least several times to determine the reflectivity measurement values of 200 or more effective reflection points. Specifically, the reader unit 120, that is, the point cloud visualization device, reads and records the reflectivity measurement values of the multiple effective reflection points.

Continuously with reference to Fig. 2, the evaluator module 130 is configured to determine the reflectivity parameter of the channel to be detected. The evaluator module 130 includes: a communication unit configured to receive the reflectivity measurement value determined by the LiDAR; and a processor unit configured to determine the reflectivity parameter of the channel to be detected based on the communication unit.

In some embodiments of this disclosure, the target plate 102 has the predetermined reflectivity standard value, and the evaluator module 130 determines the reflectivity accuracy of the channel to be detected based on the reflectivity standard value and the multiple reflectivity measurement values. The evaluator module 130 further determines the reflectivity precision of the channel to be detected based on the multiple reflectivity measurement values.

The reflectivity accuracy reflects the difference between the reflectivity measurement value determined by the LiDAR 101 and the reflectivity standard value. Higher reflectivity accuracy represents higher consistency between a reflectivity measurement value of the LiDAR 101 and real data.

Specifically, the evaluator module 130 determines the average measurement value based on the average value of the multiple reflectivity measurement values; and determines the reflectivity accuracy of the channel to be detected based on the difference between the average measurement value and the reflectivity standard value:

$$\mu = \overline{R}_1 - R$$

among them, $\mu$ represents the reflectivity accuracy of the LiDAR 101; $\overline{R}_1$ represents the average measurement value; and R represents the reflectivity standard value of the target plate 102.

Specifically, the step of determining the reflectivity accuracy of the channel to be detected can further include: determining an average measurement value based on an average value of the multiple reflectivity measurement values; and determining the reflectivity accuracy of the channel to be detected based on a ratio of the average measurement value to the reflectivity standard value.

The reflectivity precision reflects the degree of the consistency between the multiple reflectivity measurement values determined by performing the reflection receiving operation on the target plate 102 at the same distance. Higher reflectivity precision represents smaller random error of reflectivity measurement value of the LiDAR 101.

Specifically, the evaluator module 130 determines the reflectivity precision of the channel to be detected based on the standard deviation of the multiple reflectivity measurement values:

among them, $\mu\mu$ represents the reflectivity accuracy of the LiDAR 101; $\overline{R}_1 \overline{R}_1 \overline{R}_1$ represents the average measurement value; and R represents the reflectivity standard value of the target plate 102.

Specifically, the step of determining the reflectivity accuracy of the channel to be detected can further include: determining the average measurement value based on the average value of the multiple reflectivity measurement values; and determining the reflectivity accuracy of the channel to be detected based on the ratio of the average measurement value to the reflectivity standard value.

The reflectivity precision reflects the degree of the consistency between the multiple reflectivity measurement values determined by performing the reflection receiving operation on the target plate 102 at the same distance. Higher reflectivity precision represents smaller random error of reflectivity measurement value of the LiDAR 101.

Specifically, the evaluator module 130 determines the reflectivity precision of the channel to be detected based on the standard deviation of the multiple reflectivity measurement values:

$$\sigma = \sqrt{\frac{\sum(R_i - \overline{R}_1)^2}{N}}$$

among them, $\overline{R}_1$ represents the average measurement value; and Ri represents the i-th reflectivity measurement value.

It should be noted that in some embodiments of this disclosure, the LiDAR 101 is the multi-line LiDAR 101, that is, the LiDAR 101 includes: multiple detection channels. The reflectivity parameter determined by the evaluator module 130 is the reflectivity parameter of the channel to be detected. Therefore, after the reflectivity parameter of the channel to be detected is determined, the reflection receiving operator module determines the channel to be detected again, selects another channel from the multiple detection channels as the channel to be detected, and then performs the reflection receiving operation again, and the evaluator module 130 determines the reflectivity parameter of the channel to be detected determined again until the respective reflectivity parameters of all detection channels are determined.

In some embodiments of this disclosure, the evaluator module is further configured to: based on the reflectivity parameter of each detection channel, calculate the standard deviation of the reflectivity parameters of the respective detection channels, and determine the reflectivity precision of the LiDAR, to evaluate the consistency of the reflectivity measurement of the respective detection channels of the LiDAR; and based on the reflectivity accuracy of each detection channel, calculate the average value of the reflectivity accuracy of the respective detection channels, and determine the reflectivity accuracy of the LiDAR, to evaluate the reflectivity measurement accuracy of the entire LiDAR system.

Specifically, the controller unit 110 changes the relative position and orientation of the LiDAR 101 for many times, to cause the determined channels to be detected to be enabled to be incident in the horizontal direction on the target plate 102 in turn, and the reflectivity measurement values of the multiple effective reflection points are determined for each time, and then the evaluator module 130 calculates the reflectivity parameter of each detection channel, that is, the controller unit 110 changes the pitch angle of the LiDAR 101 again, the pitch angle of the LiDAR 101 is changed for each time, to cause one detection channel as the channel to be detected to be incident on the target plate 102 in the horizontal direction, and the reader unit 120 records the reflectivity measurement values of the multiple effective reflection points for each time.

Continuously with reference to Fig. 1, in some embodiments of this disclosure, the controller unit 110 further changes the measurement distance d between the target plate 102 and the LiDAR 101 based on the measurer component. The reflection receiving operator module performs the reflection receiving operation at the measurement distance d to determine the multiple reflectivity measurement values at the measurement distance d. The evaluator module 130 determines the reflectivity parameter of the channel to be detected at the measurement distance d.

Specifically, in some embodiments of this disclosure, before the channel to be detected is determined, the controller unit 110 changes the measurement distance d between the target plate 102 and the LiDAR 101.

Therefore, after the reflection receiving operator module performs the reflection receiving operation on all detection channels at the predetermined detection distance, and the evaluator module 130 determines the reflectivity parameters of all channels to be detected at the predetermined detection distance, the reflection receiving operator module changes the measurement distance d using the measurer component, and the evaluator module 130 determines the reflectivity parameter of each detection channel at the changed measurement distance d again. Each time the reflection receiving operator module changes the measurement distance d, the evaluator module 130 determines the reflectivity parameter of each detection channel at the changed measurement distance d.

It should be noted that the selection of the effective reflection point is related to the measurement distance d. The closer the measurement distance d between the LiDAR 101 and the target plate 102 is, the greater the circumferential angle of the target plate 102 relative to the ranging center of the LiDAR 101. Reflection intensity at the edge of the target plate 102 is smaller. To ensure the consistency in the detection, when the detection distance between the target plate 102 and the LiDAR 101 is less than the predetermined value, the selected effective reflection point is located in the central area of the target plate 102.

In some embodiments of this disclosure, the reflection receiving operator module further includes: an area determiner unit (not shown in the figure) configured to determine whether the target plate 102 is located in the near-field measurement range or the far-field measurement range. When the area determiner unit determines that the target plate 102 is located in the near-field measurement range, the distance between any effective reflection point and the edge of the target plate 102 is greater than 10 cm.

Specifically, the area determiner unit determines whether the target plate 102 is located in the near-field measurement range or the far-field measurement range based on the measurement distance d or the central angle of the target plate 102 relative to the ranging center of the LiDAR 101.

In some embodiments of this disclosure, the target plate 102 is detachably fixed to the mechanical unit, and the number of the target plates 102 is multiple, and different target plates 102 have different reflectivity standard values. Therefore, by replacing with different target plates 102, the detection system can determine the reflectivity parameters of the LiDAR 101 for different reflectivity standard values.

It should be noted that in some embodiments of this disclosure, the evaluator module 130 further includes: an integrator unit (not shown in the figure) configured to determine the reflectivity parameter of the LiDAR 101, where the reflectivity parameter of the LiDAR 101 includes: the reflectivity parameter of at least one detection channel of the LiDAR 101 for the target plate 102 of at least one reflectivity standard value at at least one measurement distance d.

Specifically, the integrator unit is further configured to: for one measurement distance d and the target plate 102 of one reflectivity standard value, determine the reflectivity precision of the LiDAR based on the reflectivity parameter of each detection channel; and determine the reflectivity accuracy of the LiDAR based on the reflectivity accuracy of each detection channel.

In addition, this disclosure further discloses a LiDAR.

Reflectivity accuracy of the LiDAR ranges from -40% to 40%, where the reflectivity accuracy of the LiDAR is determined by the detection method of this disclosure.

The reflectivity accuracy of the LiDAR is determined by the detection method of this disclosure, and thus specific technical solutions of the LiDAR refer to embodiments of the detection method mentioned above, which are not repeated herein in this disclosure.

Furthermore, this disclosure further discloses a LiDAR.

Reflectivity precision of the LiDAR ranges from 0 to 40%, where the reflectivity precision of the LiDAR is determined by the detection method of this disclosure.

The reflectivity precision of the LiDAR is determined by the detection method of this disclosure, and thus specific technical solutions of the LiDAR refer to embodiments of the detection method mentioned above, which are not repeated herein in this disclosure.

To sum up, the reflectivity precision and accuracy of the LiDAR for the detection of an object within a vertical or horizontal angle are counted under a predetermined environmental condition using the target plate of the predetermined reflectivity and under a condition that the LiDAR is at the predetermined distance from the target plate, to determine the consistency of the reflectivity measured by the respective channels of the LiDAR and deviation from actual reflectivity of the target plate. This disclosure is applicable to any type of LiDAR, such as the mechanical LiDAR and the solid-state LiDAR, or the like, to cause that the reflectivity performance of the commercially available LiDARs can be intuitively compared and effectively evaluated, to improve the accuracy of evaluating the reflectivity performance of the LiDAR.

Although this disclosure is disclosed above, this disclosure is not limited thereto. Any person skilled in the art can make various changes and modifications without departing from the spirit and scope of this disclosure. Therefore, the protection scope of this disclosure should be subject to the scope defined by the claims.

**Claims**

1. A detection method for a LiDAR, comprising:

    performing a reflection receiving operation to enable a detector of a channel to be detected to receive a plurality of echo signals reflected by a target plate, to receive a plurality of reflectivity measurement values of the channel to be detected for the target plate, wherein the channel to be detected is a detection channel of the LiDAR; and
    determining a reflectivity parameter of the channel to be detected based on a result of the reflection receiving operation, wherein the reflectivity parameter of the channel to be detected comprises: at least one of reflectivity accuracy of the channel to be detected or reflectivity precision of the channel to be detected.

2. The detection method for the LiDAR based on claim 1, wherein the reflection receiving operation comprises: enabling the channel to be detected to scan across the target plate for at least once; and determining a reflectivity measurement value of at least one reflection point each time the channel to be detected scans across the target plate.

3. The detection method for the LiDAR based on claim 1, wherein the target plate has a predetermined reflectivity standard value; and the step of determining the reflectivity parameter of the channel to be detected comprises:

   determining the reflectivity accuracy of the channel to be detected based on the reflectivity standard value and the plurality of reflectivity measurement values; and determining the reflectivity precision of the channel to be detected based on the plurality of reflectivity measurement values.

4. The detection method for the LiDAR based on claim 1, wherein the reflection receiving operation further comprises: determining the channel to be detected.

5. The detection method for the LiDAR based on claim 1, wherein in the step of performing the reflection receiving operation, the reflection receiving operation is performed on one channel to be detected each time.

6. The detection method for the LiDAR based on claim 4, wherein the step of determining the channel to be detected comprises: changing a position and orientation of the LiDAR relative to the target plate, to cause a laser beam emitted by the channel to be detected to be incident on the target plate at a predetermined angle.

7. The detection method for the LiDAR based on claim 4, wherein the reflection receiving operation further comprises: changing measurement distance between the target plate and the LiDAR;

   performing the reflection receiving operation at the measurement distance to determine the plurality of reflectivity measurement values at the measurement distance, in the step of performing the reflection receiving operation; and determining the reflectivity parameter of the channel to be detected at the measurement distance, in the step of determining the reflectivity parameter of the channel to be detected.

8. The detection method for the LiDAR based on claim 7, wherein before determining the channel to be detected, the measurement distance between the target plate and the LiDAR is changed.

9. The detection method for the LiDAR based on claim 7, wherein the reflection receiving operation further comprises: changing the reflectivity standard value of the target plate;

   determining the plurality of reflectivity measurement values for the target plate of the reflectivity standard value at the measurement distance, in the step of performing the reflection receiving operation; and determining the reflectivity parameter of the channel to be detected for the target plate of the reflectivity standard value at the measurement distance, in the step of determining the reflectivity parameter of the channel to be detected.

10. The detection method for the LiDAR based on claim 7, wherein before determining the measurement distance between the target plate and the LiDAR, the reflectivity standard value of the target plate is changed.

11. The detection method for the LiDAR based on claim 10, wherein the step of changing the reflectivity standard value of the target plate comprises: replacing the target plate, wherein different target plates have different reflectivity standard values.

12. The detection method for the LiDAR based on claim 10, further comprising: determining the reflectivity parameter of the LiDAR after the step of determining the reflectivity parameter of the channel to be detected, wherein the reflectivity parameter of the LiDAR comprises: the reflectivity parameter of each detection channel of the LiDAR for the target plate of at least one reflectivity standard value at least one measurement distance.

13. A detection system for a LiDAR, comprising: a detector apparatus configured to implement the detection method based on any one of claims 1 to 12 to determine a reflectivity parameter of a channel to be detected in the LiDAR.

14. A detection system for a LiDAR, comprising:

   a reflection receiving operator module configured to perform a reflection receiving operation to enable a detector of a channel to be detected to receive a plurality of echo signals reflected by a target plate, to receive a plurality of reflectivity measurement values of the channel to be detected for the target plate, wherein the channel to be detected is a detection channel of the LiDAR; and

an evaluator module configured to determine a reflectivity parameter of the channel to be detected based on a result of the reflection receiving operation, wherein the reflectivity parameter of the channel to be detected comprises: at least one of reflectivity accuracy of the channel to be detected or reflectivity precision of the channel to be detected.

15. The detection system based on claim 14, wherein the reflection receiving operator module comprises:

a mechanical unit configured to fix and change the LiDAR and the target plate,
a controller unit configured to control the LiDAR to perform the reflection receiving operation, and
a reader unit configured to read point cloud data, wherein
the controller unit enables the channel to be detected to scan across the target plate for at least once, and
the reader unit determines a reflectivity measurement value of at least one reflection point each time the channel to be detected scans across the target plate.

16. The detection system based on claim 15, wherein the controller unit is further configured to determine the channel to be detected.

17. The detection system based on claim 16, wherein the controller unit determines one channel to be detected each time the reflection receiving operation is performed.

18. The detection system based on claim 16, wherein before the reflective receiving operation is performed, the controller unit changes a position and orientation of the LiDAR relative to the target plate by the mechanical unit, to cause a laser beam emitted by the channel to be detected to be incident on the target plate at a predetermined angle.

19. The detection system based on claim 15, wherein at least one of the LiDAR or the target plate is movably fixed to the mechanical unit, wherein
the mechanical unit further comprises: a measurer component configured to determine measurement distance between the target plate and the LiDAR.

20. The detection system based on claim 14, wherein the number of the target plates is two or more, and different target plates have different reflectivity standard values.

21. The detection system based on claim 14, wherein the evaluator module comprises: an integrator unit configured to determine the reflectivity parameter of the LiDAR, wherein the reflectivity parameter of the LiDAR comprises: the reflectivity parameter of at least one detection channel of the LiDAR for the target plate of at least one reflectivity standard value at at least one measurement distance.

22. A LiDAR, wherein reflectivity accuracy of the LiDAR ranges from -40% to 40%, and wherein the reflectivity accuracy of the LiDAR is determined by the detection method based on any one of claims 1 to 12.

23. A LiDAR, wherein reflectivity precision of the LiDAR ranges from 0 to 40%, and wherein the reflectivity precision of the LiDAR is determined by the detection method based on any one of claims 1 to 12.

S101

Build detection system

S140

Change reflectivity standard value of target plate

S130

Change measurement distance between target plate and LiDAR

S110

Perform reflection receiving operation to enable detector of channel to be detected to receive multiple echo signals reflected by target plate, to determine multiple reflectivity measurement values of channel to be detected to target plate given by LiDAR, where channel to be detected is detection channel of LiDAR

S120

Determine reflectivity parameter of channel to be detected based on result of reflection receiving operation, where reflectivity parameter of channel to be detected includes: at least one of reflectivity accuracy of channel to be detected or reflectivity precision of channel to be detected

S150

Determine reflectivity parameter of LiDAR, where reflectivity parameter of LiDAR includes: reflectivity parameter of each detection channel of LiDAR for target plate of at least one reflectivity standard value at at least one measurement distance

FIG. 1

102

103

110

101

111

120

130

d

FIG. 2

Incident light

Reflected light

FIG. 3

102

101

111

110

FIG. 4

Channel 1    + 7°
Channel 6    + 2°
Channel 12   0°

Channel 30   - 6°

Channel 40   -16°

FIG. 5

FIG. 6

**EP 4 517 374 A1**

## INTERNATIONAL SEARCH REPORT

| International application No. |
| --- |
| **PCT/CN2022/120779** |

| A. | CLASSIFICATION OF SUBJECT MATTER |
| --- | --- |

G01S 7/497(2006.01)i

According to International Patent Classification (IPC) or to both national classification and IPC

| B. | FIELDS SEARCHED |
| --- | --- |

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, EPTXTC, WPABSC, ENTXT: 激光雷达, 反射率, 反射系数, 反射比, 反射能力, 反射强度, 测试, 校准, 校正, 定标, 标定, lidar, reflectivity, reflectance, reflection, test+, calibrat+, revis+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112558047 A (CHINA FAW CO., LTD.) 26 March 2021 (2021-03-26)<br>description, paragraphs [0038]-[0121], and figures 1-6 | 1-23 |
| Y | CN 113050072 A (BEIJING JINGWEI HIRAIN TECHNOLOGIES CO., LTD.) 29 June 2021 (2021-06-29)<br>description, paragraphs [0083]-[0093] and [0136]-[0145], and figures 1, 2, 4, and 10 | 1-23 |
| Y | US 2021325520 A1 (VELODYNE LIDAR INC.) 21 October 2021 (2021-10-21)<br>description, paragraphs [0035]-[0077], and figures 1-3 | 1-23 |
| Y | CN 111856434 A (SUTENG INNOVATION TECHNOLOGY CO., LTD.) 30 October 2020 (2020-10-30)<br>description, paragraphs [0063]-[0097], and figures 3-4 | 1-23 |
| A | CN 111239711 A (SOUTHWEST INSTITUTE OF TECHNICAL PHYSICS) 05 June 2020 (2020-06-05)<br>entire document | 1-23 |
| A | CN 214895793 U (SHENZHEN 3IROBOTIX CO., LTD.) 26 November 2021 (2021-11-26)<br>entire document | 1-23 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 January 2023** | **20 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

18

**INTERNATIONAL SEARCH REPORT**
**Information on patent family members**

International application No.

**PCT/CN2022/120779**

| Patent document cited in search report | | | Publication date (day/month/year) | Patent family member(s) | | | Publication date (day/month/year) |
|---|---|---|---|---|---|---|---|
| CN | 112558047 | A | 26 March 2021 | None | | | |
| CN | 113050072 | A | 29 June 2021 | None | | | |
| US | 2021325520 | A1 | 21 October 2021 | WO | 2021211585 | A2 | 21 October 2021 |
| CN | 111856434 | A | 30 October 2020 | None | | | |
| CN | 111239711 | A | 05 June 2020 | None | | | |
| CN | 214895793 | U | 26 November 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210467154